(19)

Europäisches
Patentamt
European
Patent Office
Office européen
des brevets

(11) **EP 2 707 140 B1**

(12) **EUROPEAN PATENT SPECIFICATION**

(45) Date of publication and mention
of the grant of the patent:
**16.11.2016 Bulletin 2016/46**

(21) Application number: **12719757.2**

(22) Date of filing: **11.05.2012**

(51) Int Cl.:
**B02C 17/18** *(2006.01)*     **B02C 23/12** *(2006.01)*
**B02C 25/00** *(2006.01)*     **G05B 13/04** *(2006.01)*

(86) International application number:
**PCT/EP2012/058708**

(87) International publication number:
**WO 2012/156285 (22.11.2012 Gazette 2012/47)**

(54) **METHOD OF OBSERVING A CHANGE OF MASS INSIDE A GRINDING UNIT**

VERFAHREN ZUR BEOBACHTUNG EINER MASSEÄNDERUNG IN EINER SCHLEIFEINHEIT

PROCÉDÉ D'OBSERVATION D'UN CHANGEMENT DE MASSE À L'INTÉRIEUR D'UNE INSTALLATION DE BROYAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2011 EP 11166126**

(43) Date of publication of application:
**19.03.2014 Bulletin 2014/12**

(73) Proprietor: **ABB Research Ltd.**
**8050 Zürich (CH)**

(72) Inventors:
• **GALLESTEY ALVAREZ, Eduardo**
**CH-5507 Mellingen (CH)**
• **STADLER, Konrad**
**CH-8166 Niederweningen (CH)**

(74) Representative: **ABB Patent Attorneys**
**c/o ABB Schweiz AG**
**Intellectual Property CH-IP**
**Brown Boveri Strasse 6**
**5400 Baden (CH)**

(56) References cited:
**WO-A1-2007/110466     US-A- 4 225 091**
**US-A1- 2008 244 986**

• **SANKAR K ET AL: "Online-Steuerung und Optimierung des Mahlvorgangs in Kugelmühlen", ZKG INTERNATIONAL, BAUVERLAG BV., GETERSLOH, DE, vol. 55, no. 11/2002, 1 January 2002 (2002-01-01), pages 92-99, XP002438577, ISSN: 0949-0205**

## Description

TECHNICAL FIELD

The invention relates to the field of grinding processes, and in particular to a method of observing a change of mass inside a grinding unit like a ball mill or semi-autogenous grinding (SAG) mill.

BACKGROUND OF THE INVENTION

Grinding processes are commonly used in industrial processes, particularly in the cement and minerals production and in food processing. The purpose is to grind raw material to an adequate grain size. Thus the surface is increased so that subsequent chemical reactions or mechanical separation processes take place more efficiently.

A large amount of electrical energy is consumed in the grinding processes. For example electrical energy cost is the second largest cost position in the cement production process. For that reason grinding optimization systems are widely used in industry. These optimization systems rely on the amount of mass inside the grinding unit which is related to a filling level or filling degree. This quantity changes continuously for instance due to the variable hardness of the material to be grinded. Measuring inside a grinding unit is impossible during operation because of the grinding work and a resulting dust. An additional problem is that the output from the grinding unit can not be measured directly because the mass transport is done by convection either with water or with air.

A measurement principle outside of the grinding unit, which is also known as a "electric ear" and which is widely used especially for ball mills, detects noise or vibration of a mill shell with a microphone. The idea is that when the mill is becoming empty, the noise or the vibration level is higher than when the mill is filling up. The results however are unreliable and often useless because of a poor accuracy of the measurements. Performing a spectral analysis of the noise and identifying a relative share of selected frequencies slightly improves the accuracy. But an air gap between the mill shell and the microphone which makes the method very prone to interferences from neighboring sources of noise and the thick walls of the shell which unpredictably influence different frequencies still lead to an insufficient accuracy.

DE 19933995 discloses a measurement system for observing a mass inside a ball mill using microphones directly attached to the wall of the mill shell. The system analyzes intensity and the spectra of the noise and combines it with measurements of the phase angle of the mill to gain additional information about the movement of balls inside the mill. But the proposed solution still suffers from the unpredictable influence and the insufficient accuracy.

WO 2007/110466 A1 discloses a method for estimating an amount of balls among ore material inside a semi-autogenous mill. A very exact estimation or measurement of the fill level of the mill along with other variables such as the motor power and the oil pressure of the bearings are used as input for an expanded Kalman filter to calculate a percentage of the volume of the balls compared to the total volume of the mill.

SUMMARY OF THE INVENTION

It is an objective of the invention to provide a more reliable and accurate method for observing a change of mass inside a grinding unit as part of a grinding process with a storing unit.

This objective is achieved by a method for observing a change of mass inside a grinding unit according to claim 1.

Preferred embodiments are evident from the dependent patent claims.

According to the invention the change of mass inside the grinding unit is observed in the sense of a state observer in contrast to a measurement of said quantity. A storing unit like a silo is connected with the grinding unit via a mill output path and is located in a flow direction of the material downstream of the grinding unit. The change of mass inside the grinding unit is derived from a previously established mass balance for the grinding unit and a previously established mass balance for the storing unit. A mass flow of a process input path, a mass flow of a process output path, and a change of mass of the grinded material inside the storing unit as parts of the mass balances are repeatedly determined. Determining comprises measuring and deriving wherein deriving involves modeling.

In a first preferred embodiment the grinding process is controlled using the estimated change of mass inside the grinding unit as an input for a controller. Thus an energy consumption of the grinding process can be reduced or optimized.

In a further preferred embodiment the change of mass inside the grinding unit is derived using state estimation techniques like a Kalman filter or a moving horizon estimation. Thus complex grinding processes with undetermined process models that, e.g. due to the existence of unknown process variables, are not amenable to a direct analytical solution like grinding process with determined process models can also be observed.

In a further preferred embodiment the grinding process comprises a closed circuit with a sizing unit which can also be referred to as a separating unit or screening unit like a sieve, a screen, a separator cyclone, or a filter. The sizing unit is located in the flow direction of the material upstream of the storing unit separating coarse and fine material using a cutoff size. A return path returns coarse material from the sizing unit back to the grinding unit. The change of mass inside the grinding unit is derived from the previously established mass balance of the grinding unit, the previously established mass balance of the storing unit, a previously established mass balance of the sizing unit, and a previously established mass balance of the return path. Thus the method for observing the change of mass inside a grinding unit can be applied to systems with closed circuits grinding processes.

In a further preferred embodiment a change of mass inside the grinding unit return path is derived. This value is used to derive the change of mass inside the grinding unit. Thus more detailed aspects like a transport delay in the return path can be modeled and lead to a higher accuracy of the observation.

In a further preferred embodiment the change of mass of the grinded material inside the storing unit is determined by optical or acoustic sensing of the surface of the mass inside the storing unit. Thus an accurate determination of the change of mass inside the storing unit can be provided.

BRIEF DESCRIPTION OF THE DRAWINGS

The subject matter of the invention will be explained in more detail in the following paragraph with reference to preferred exemplary embodiments which are illustrated in the attached drawings, which schematically show:

Figure 1 an open circuit grinding process with a mill and a silo; and

Figure 2 a closed circuit grinding process with a mill, a separator cyclone, and a silo.

The reference symbols used in the drawings, and their meanings, are listed in summary form in the list of designations. In principle, identical parts are provided with the same reference symbols in the figures.

DETAILED DESCRIPTION OF THE INVENTION

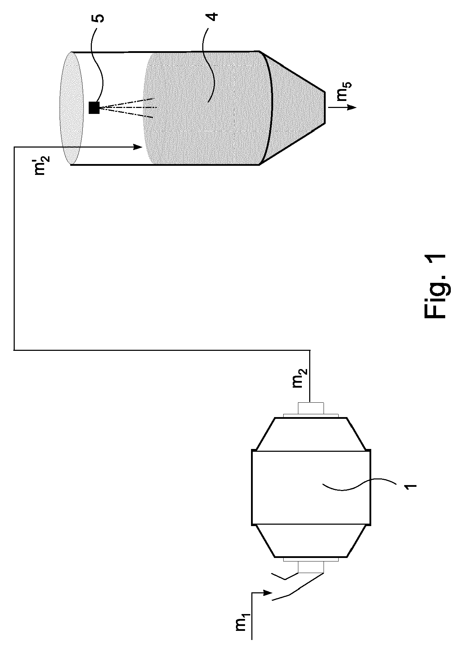

Fig. 1 shows an open circuit grinding process with a mill 1 and a silo 4. Material that needs to be grinded enters the mill 1 through a process input path. In the mill 1 the material is grinded. After the material has been grinded the material leaves the mill 1 through a mill output path connecting the mill 1 and the silo 4 and enters the silo 4 where the material is stored. Material can be taken from the silo 4 via a process output path. There are repeated measurements of a mass flow of the process input path $m_1$ and a mass flow of the process output path $m_5$ using weight sensors. In addition a fill volume $V_4$ inside the silo 4 is measured using a optical surface sensor 5. A mass balance for the mill 1,

$$d/dt \ M_1 \ = \ m_1 \ - \ m_2$$

a mass balance of the silo 4, a known average material density $\rho$ in the silo 4,

$$d/dt \ M_4 \ = \ m_2{}' \ - \ m_5 \ = \ d/dt \ V_4 \ \rho$$

and an assumption that is no transport delay in the mill output path

$$m_2 \ \approx \ m_2{}'$$

lead to a following model equation for the change of mass inside the mill 1:

$$d/dt \ M_1 \ = \ m_1 \ - \ m_5 \ - \ d/dt \ V_4 \ \rho$$

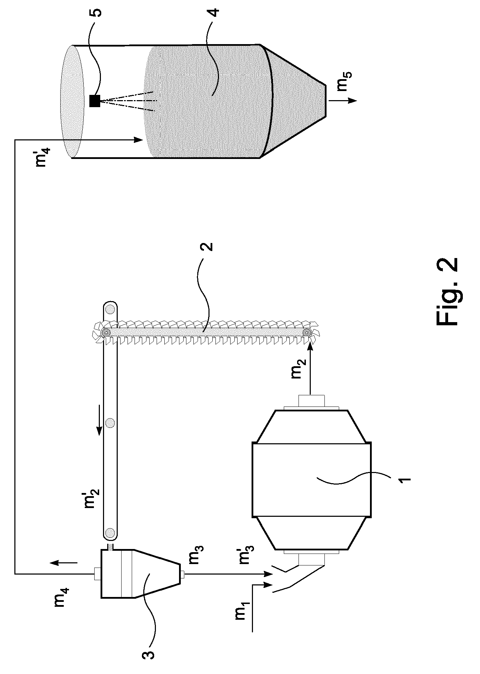

This model equation is repeatedly solved using the repeatedly measured mass flow of the process input path $m_1$, repeatedly measured mass flow of the process output path $m_5$, and the repeatedly measured fill volume inside the silo. Fig. 2 shows a closed circuit grinding process. In addition to Fig. 1 a separator cyclone 3 is located between the mill 1 and the silo 4. The mill is connected with the separator cyclone through the mill output path. The grinded material leaving the mill 1, is lifted by an elevator 2, and enters the separator cyclone 3. In the separator cyclone 3 the grinded material is divided into coarse and fine material according to a cutoff size. The fine material flows through a separator output path into the silo 4. The coarse material is dropped back into the mill 1 through a mill return path. A mass balance for the mill 1,

$$d/dt \ M_1 \ = \ m_1 \ + \ m_3{}' \ - \ m_2$$

a mass balance of the separator cyclone, an assumption that the change of mass inside the separator cyclone is negligible,

$$d/dt \ M_3 \ = \ m_2{}' \ - \ m_3 \ - \ m_4 \ \approx \ 0$$

a mass balance of the silo 4, a known average material density $\rho$ in the silo 4,

$$d/dt \ M_4 \ = \ m_2{}' \ - \ m_5 \ = \ d/dt \ V_4 \ \rho$$

and the assumptions that there are no transport delays in the mill output path, the mill return path and the separator output path

$$m_2 \approx m_2{}'$$

$$m_3 \approx m_3'$$
$$m_4 \approx m_4'$$

lead to a following model equation for the change of mass inside the mill 1:

$$d/dt\ M_1 = m_1 - m_5 - d/dt\ V_4\ \rho$$

Instead of the configurations shown in Fig. 1 and 2 any open or closed circuit grinding configuration with one, two or more grinding stages are possible like for example a combination of a SAG mill and a ball mill which comprise any form of grinding unit, separating unit, storing unit and in the case of an closed circuit arrangement any form of return loop.

It is also possible to make other assumptions for the change of mass inside the return path and the separator cyclone 3 and/or to provide further measurements instead. If, contrary to the above assumption, a change of mass in the return path is accounted for, further measurements of additional process quantities may be needed. On the other hand, the model of the grinding process may become undetermined due to missing measurements, and a model and estimator approach like a Kalman filter or a moving horizon estimation as described in EP 2169483 can be used to determine the change of mass inside the grinding unit. This is particular advantageous if the grinding process cannot be treated as time invariant. The measurement of the mass flow of the process input path $m_1$ and the mass flow of the process output path $m_5$ can be done using other measuring principle such as optical measurement. For the measurement of the fill volume $V_4$ inside the silo 4 acustic principles can be used.

## LIST OF REFERENCE NUMERALS

| | |
|---|---|
| 1 | mill |
| 2 | elevator |
| 3 | separator cyclone |
| 4 | silo |
| 5 | surface sensor |
| $m_1$ | mass flow of the process input path |
| $m_2$ | mass flow of the mill output path |
| $m_3$ | mass flow of the mill return path |
| $m_4$ | mass flow of the separator output path |
| $m_5$ | mass flow of the process output path |
| $M_1$ | mass inside the mill |
| $M_2$ | mass in the return path |
| $M_3$ | mass inside the separator cyclone |
| $M_4$ | mass inside the silo |
| $V_4$ | fill volume inside the silo |

## Claims

1. Method of observing a change of mass inside a grinding unit (1) as a part of a grinding process with a process input path feeding the grinding unit (1) with input material to be grinded, a storing unit (4) for storing grinded material from the grinding unit (1), and a process output path for removing grinded material from the storing unit (4),
**characterized in that**,
the method comprising the following steps:

a) determining a mass flow of the process input path ($m_i$) and a mass flow of the process output path ($m_s$);
b) determining a change of mass of the grinded material inside the storing unit (4); and
c) deriving the change of mass inside the grinding unit (1) from the determined change of mass inside the storing unit and the determined mass flows ($m_i$, $m_s$), and based on a previously established mass balance for the grinding unit (1) and a previously established mass balance for the storing unit (4).

2. Method according to claim 1, further comprising the step:

d) controlling the grinding process in response to the observed change of mass inside the grinding unit (1).

3. Method according to claim 1 or 2, comprising the step:

c')deriving the change of mass inside the grinding unit (1) from the determined change of mass inside the storing unit (4) and the determined mass flows ($m_1$, $m_5$), and based on a previously established mass balance for the grinding unit (1) and a previously established mass balance for the storing unit (4) using state estimation techniques like a Kalman filter or a moving horizon estimation.

4. Method according to one of the claims 1 to 3, whereas the grinding process comprises a closed circuit with a sizing unit (3) separating coarse and fine material located upstream from the storing unit (4) and a return path returning coarse material from the sizing unit (3) to the grinding unit (1), comprising the step:

c")deriving the change of mass inside the grinding unit (1) from the determined change of mass inside the storing unit (4) and the determined mass flows ($m_i$, $m_5$), and based on a previously established mass balance for the grinding unit (1), a previously established mass balance for the storing unit (4), a previously established mass balance for the sizing (3) unit, and a previously established mass balance for the return path.

5. Method according to claim 4, further comprising the step:

e) deriving a change of mass in the return path and using this value to deriving the change of mass inside the grinding unit (1).

6. System for observing a change of mass inside a grinding unit (1) as a part of a grinding process with a process input path feeding the grinding unit (1) with input material to be grinded, a storing unit (4) for storing grinded material from the grinding unit (1), and a process output path for removing grinded material from the storing unit (4), the system comprising first means for determining a mass flow of the process input path ($m_1$) and a mass flow of the process output path ($m_5$), second means for determining a change of mass of the grinded material inside the storing unit (4), and third computing means for receiving the determined change of mass inside the storing unit (4) from the second means and the determined mass flows from the first means **characterized in that** the third means are adapted to derive the change of mass inside the grinding unit(1) from the determined change of mass inside the storing unit (4) and the determined mass flows, and based on a previously established mass balance for the grinding unit (1) and a previously established mass balance for the storing unit (4).

**Patentansprüche**

1. Verfahren zum Beobachten einer Masseänderung innerhalb einer Mahleinheit (1) als Teil eines Mahlverfahrens mit einem Verfahrenseingangsweg, der der Mahleinheit (1) zu mahlendes Einsatzmaterial zuführt, einer Speichereinheit (4) zum Speichern von gemahlenem Material von der Mahleinheit (1) und einem Verfahrensausgangsweg zum Entfernen von gemahlenem Material aus der Speichereinheit (4), **dadurch gekennzeichnet, dass** das Verfahren folgende Schritte umfasst:

a) Bestimmen eines Masseflusses des Verfahrenseingangswegs ($m_i$) und eines Masseflusses des Verfahrensausgangswegs ($m_s$);

b) Bestimmen einer Masseänderung des gemahlenen Materials innerhalb der Speichereinheit (4); und
c) Ableiten der Masseänderung innerhalb der Mahleinheit (1) aus der bestimmten Masseänderung innerhalb der Speichereinheit und den bestimmten Masseflüssen ($m_i$, $m_s$) und auf der Grundlage eines zuvor ermittelten Massegleichgewichts für die Mahleinheit (1) und eines zuvor ermittelten Massegleichgewichts für die Speichereinheit (4).

2. Verfahren gemäß Anspruch 1, ferner umfassend den Schritt:

d) Steuern des Mahlverfahrens in Antwort auf die beobachtete Masseänderung innerhalb der Mahleinheit (1).

3. Verfahren gemäß Anspruch 1 oder 2, umfassend den Schritt:

c') Ableiten der Masseänderung innerhalb der Mahleinheit (1) aus der bestimmten Masseänderung innerhalb der Speichereinheit (4) und den bestimmten Masseflüssen ($m_i$, $m_5$) und auf der Grundlage eines zuvor ermittelten Massegleichgewichts für die Mahleinheit (1) und eines zuvor ermittelten Massegleichgewichts für die Speichereinheit (4) unter Verwendung von Zustandsabschätzungsverfahren wie einem Kalman-Filter oder einer Moving-Horizon-Abschätzung.

4. Verfahren gemäß einem der Ansprüche 1 bis 3, wobei das Mahlverfahren einen geschlossenen Kreis mit einer Klassiereinheit (3), die grobes und feines Material trennt und der Speichereinheit (4) vorgeschaltet angeordnet ist, und einen Rückführweg, der grobes Material von der Klassiereinheit (3) zu der Mahleinheit (1) zurückführt, umfasst, umfassend den Schritt:

c") Ableiten der Masseänderung innerhalb der Mahleinheit (1) aus der bestimmten Masseänderung innerhalb der Speichereinheit (4) und den bestimmten Masseflüssen ($m_i$, $m_5$) und auf der Grundlage eines zuvor ermittelten Massegleichgewichts für die Mahleinheit (1), eines zuvor ermittelten Massegleichgewichts für die Speichereinheit (4), eines zuvor ermittelten Massegleichgewichts für die Klassiereinheit (3) und eines zuvor ermittelten Massegleichgewichts für den Rückführweg.

5. Verfahren gemäß Anspruch 4, ferner umfassend den Schritt:

e) Ableiten einer Masseänderung in dem Rückführweg und Verwenden dieses Werts zum Ableiten der Masseänderung innerhalb der Mahleinheit (1).

6. System zum Beobachten einer Masseänderung innerhalb einer Mahleinheit (1) als Teil eines Mahlverfahrens mit einem Verfahrenseingangsweg, der der Mahleinheit (1) zu mahlendes Einsatzmaterial zuführt, einer Speichereinheit (4) zum Speichern von gemahlenem Material von der Mahleinheit (1) und einem Verfahrensausgangsweg zum Entfernen von gemahlenem Material aus der Speichereinheit (4), wobei das System umfasst:

erste Mittel zum Bestimmen eines Masseflusses des Verfahrenseingangswegs ($m_1$) und eines Masseflusses des Verfahrensausgangswegs ($m_5$),
zweite Mittel zum Bestimmen einer Masseänderung des gemahlenen Materials innerhalb der Speichereinheit (4) und
dritte Computermittel zum Empfangen der bestimmten Masseänderung innerhalb der Speichereinheit (4) von dem zweiten Mittel und der bestimmten Masseflüsse von dem ersten Mittel, **dadurch gekennzeichnet, dass**
das dritte Mittel dafür ausgelegt ist, die Masseänderung innerhalb der Mahleinheit (1) aus der bestimmten Masseänderung innerhalb der Speichereinheit (4) und den bestimmten Masseflüssen und auf der Grundlage eines zuvor ermittelten Massegleichgewichts für die Mahleinheit (1) und eines zuvor ermittelten Massegleichgewichts für die Speichereinheit (4) abzuleiten.

**Revendications**

1. Procédé d'observation d'un changement de masse à l'intérieur d'une installation de broyage (1) faisant partie d'un processus de broyage comprenant un chemin d'entrée de processus qui alimente l'installation de broyage (1) en matériau d'entrée à broyer, une unité de stockage (4) pour stocker le matériau broyé en provenance de l'installation de broyage (1), et un chemin de sortie de processus pour évacuer le matériau broyé hors de l'unité de stockage (4), **caractérisé en ce que** le procédé comprend les étapes suivantes:

a) déterminer un débit massique du chemin d'entrée de processus ($m_i$) et un débit massique du chemin de sortie de processus ($m_s$);
b) déterminer un changement de masse du matériau broyé à l'intérieur de l'unité de stockage (4); et

c) dériver le changement de masse à l'intérieur de l'installation de broyage (1) à partir du changement de masse déterminé à l'intérieur de l'unité de stockage et des débits massiques déterminés ($m_i$, $m_s$), et sur la base d'un équilibre de masse préalablement établi pour l'installation de broyage (1) et d'un équilibre de masse préalablement établi pour l'unité de stockage (4).

2. Procédé selon la revendication 1, comprenant en outre l'étape suivante:

d) commander le processus de broyage en réponse au changement de masse observé à l'intérieur de l'installation de broyage (1).

3. Procédé selon la revendication 1 ou 2, comprenant l'étape suivante:

c') dériver le changement de masse à l'intérieur de l'installation de broyage (1) à partir du changement de masse déterminé à l'intérieur de l'unité de stockage (4) et des débits massiques déterminés ($m_i$, $m_5$), et sur la base d'un équilibre de masse préalablement établi pour l'installation de broyage (1) et d'un équilibre de masse préalablement établi pour l'unité de stockage (4) en utilisant des techniques d'estimation d'état telles qu'un filtre de Kalman ou une estimation d'horizon mobile.

4. Procédé selon l'une des revendications 1 à 3, dans lequel le processus de broyage comprend un circuit fermé présentant une unité de dimensionnement (3) pour séparer les matériaux grossiers et fins qui est située en amont de l'unité de stockage (4), et un chemin de retour pour renvoyer le matériau grossier de l'unité de dimensionnement (3) à l'installation de broyage (1), comprenant l'étape suivante:

C") dériver le changement de masse à l'intérieur de l'installation de broyage (1) à partir du changement de masse déterminé à l'intérieur de l'unité de stockage (4) et des débits massiques déterminés ($m_1$, $m_5$), et sur la base d'un équilibre de masse préalablement établi pour l'installation de broyage (1), d'un équilibre de masse préalablement établi pour l'unité de stockage (4), d'un équilibre de masse préalablement établi pour l'unité de dimensionnement (3), et d'un équilibre de masse préalablement établi pour le chemin de retour.

5. Procédé selon la revendication 4, comprenant en outre l'étape suivante:

e) dériver un changement de masse dans le chemin de retour et utiliser cette valeur pour dériver le changement de masse à l'intérieur de l'installation de broyage (1).

6. Système pour observer un changement de masse à l'intérieur d'une installation de broyage (1) faisant partie d'un processus de broyage comprenant un chemin d'entrée de processus qui alimente l'installation de broyage (1) en matériau d'entrée à broyer, une unité de stockage (4) pour stocker le matériau broyé en provenance de l'installation de broyage (1), et un chemin de sortie de processus pour évacuer le matériau broyé hors de l'unité de stockage (4), le système comprenant:

   un premier moyen pour déterminer un débit massique du chemin d'entrée de processus ($m_1$) et un débit massique du chemin de sortie de processus ($m_5$),
   un deuxième moyen pour déterminer un changement de masse du matériau broyé à l'intérieur de l'unité de stockage (4); et
   un troisième moyen de calcul pour recevoir le changement de masse déterminé à l'intérieur de l'unité de stockage (4) communiqué par le deuxième moyen et les débits massiques déterminés communiqués par le premier moyen, **caractérisé en ce que** le troisième moyen est apte à dériver le changement de masse à l'intérieur de l'installation de broyage (1) à partir du changement de masse déterminé à l'intérieur de l'unité de stockage (4) et des débits massiques déterminés, et sur la base d'un équilibre de masse préalablement établi pour l'installation de broyage (1) et d'un équilibre de masse préalablement établi pour l'unité de stockage (4).

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19933995
- WO 2007110466 A1
- EP 2169483 A